# EUROPÄISCHE PATENTSCHRIFT

(11) **EP 1 621 773 B1**
(45) Veröffentlichungstag und Bekanntmachung des Hinweises auf die Patenterteilung: **17.04.2013**
(21) Anmeldenummer: 04018134.9
(22) Anmeldetag: 30.07.2004
(51) Int. Cl.: F04D 25/08, F04D 29/32

(54) **Kühlgebläse mit Elektromotor**
Electrically driven cooling ventilator
Ventilateur de refroidissement avec moteur électrique

(43) Veröffentlichungstag der Anmeldung: 01.02.2006
(73) Patentinhaber: Brose Fahrzeugteile GmbH & Co. KG, Würzburg, 97076 Würzburg (DE)
(72) Erfinder: De Filippis, Pietro, 20124 Milano (IT); Egerland, Markus, 97218 Gerbrunn (DE); Kemmer, Detlef, 97237 Altertheim (DE); McLennan, Paul Stephen, N6H 5R9 London Ontario (CA); Redelberger, Harald, 97273 Kürnach (DE)
(74) Vertreter: Isarpatent

(56) Entgegenhaltungen:
- EP-A- 1 050 682

## Beschreibung

Die Erfindung betrifft ein Kühlgebläse mit einem elektromotorischen Antrieb, insbesondere zur Verwendung als Kühlergebläse in einem Kraftfahrzeug.

Unter dem Kühlgebläse wird das Gebläsesystem verstanden, welches im Wesentlichen aus dem Lüfterrad mit Lüfterradnabe und Lüfterblättern und einem Elektromotor zum Antreiben des Lüfters besteht. Üblicherweise wird ein solches Kühlgebläse in einer dafür vorgesehenen Zarge montiert, die beispielsweise im Motorraum eines Kraftfahrzeugs oder dergleichen befestigt ist.

Für einen sicheren Betrieb von Elektromotoren ist es erforderlich, dass die verwendeten Komponenten und Materialien bei gegebenen Betriebsbedingungen nicht überhitzt werden. Deshalb muss Sorge dafür getragen werden, dass während des Betriebes des Elektromotors mit maximaler Verlustleistung keine Überhitzung eintritt. Bei Nichtbeachtung kann dies zu einer Verringerung der Lebensdauer des Elektromotors oder zu einem Totalausfall des Elektromotors führen. Daher ist das Kühlen des Elektromotors, also das Abführen der durch die elektrischen Komponenten erzeugten Verlustwärme, insbesondere in der Kommutierungseinrichtung, der Wicklung und in den elektromagnetisch beaufschlagten Eisenbauteilen, von großer Bedeutung.

Heutige Elektromotoren sind mit einer Elektronik, z. B. zur bürstenlosen Kommutierung oder zur Drehzahlsteuerung/regelung, ausgestattet, von der gegebenenfalls zusätzlich hohe Verlustwärme freigesetzt wird. Diese Elektronik stellt in der Regel die aus thermischer Sicht kritische Komponente eines Elektromotors dar und erhöht die Kühlungsanforderungen.

Auch der Einsatz als Antriebseinheit eines Kühlgebläses für die Verbrennungsmaschine in einem Kraftfahrzeug erhöht aufgrund der extrem wechselnden Umgebungsbedingungen, wie zum Beispiel Sommer- oder Winterbetrieb, die Anforderungen bezüglich des Wärmehaushaltes des eingesetzten Elektromotors.

Bei zum Antrieb von Lüftern verwendeten Elektromotoren ist es bekannt, einen Luftstrom durch den Elektromotor zu führen, indem ein Druckunterschied zwischen Lufteintrittsöffnungen und Luftaustrittsöffnungen des Elektromotorgehäuses erzeugt und genutzt wird.

So zeigt beispielsweise die Druckschrift EP 1 050 682 A2 ein Kühlgebläse mit Elektromotor. Hierbei handelt es sich um einen Elektromotor mit innen liegendem gewickeltem Stator und einem permanenterregten Außenrotor. Die Motorelektronik befindet sich in einer Aufnahmekammer auf der Außenseite des sogenannten Statorfußes des Elektromotors und ist mit einem separaten Deckel abgedeckt. Die Lüfterradnabe ist topfförmig ausgebildet und weist auf der Innenseite Lüfterschaufeln auf, welche einen Kühlluftstrom erzeugen. Der Kühlluftstrom wird seitlich an außen liegenden Kühlrippen des Statorfußes vorbei in den Innenraum des Elektromotorgehäuses geführt und verlässt diesen auf der gegenüberliegenden Seite durch Öffnungen im Boden des topfförmigen Außenrotors und den Luftspalt zwischen der Lüfternabe und dem Außenrotor.

Die Elektronik ist durch die Abdeckung mit einem separaten Deckel gekapselt und die erzeugte Verlustwärme kann nur durch Wärmeleitung über den Statorfuß abgeführt werden. Der Wärmeleitpfad von der Elektronik zu den Kühlrippen des Statorfußes ist dabei verhältnismäßig lang. Der erzeugte Kühlluftstrom kann nur an einer Stelle über eine verhältnismäßig kurze Strecke an den Kühlrippen entlang die von der Elektronik erzeugte Wärmeenergie aufnehmen. Die von der Statorwicklung erzeugte Verlustwärme kann nur über den Kühlluftstrom nach außen abgeführt werden, da der Luftspalt zwischen Stator und Rotor praktisch wärmeisolierend wirkt. Über die Außenflächen des Elektromotors kann somit praktisch keine Wärme abgeführt werden. Diese Gestaltungsmerkmale erschweren die effektive Abfuhr der Verlustwärme. Zudem erfordert die Anordnung der Elektronik einen zusätzlichen Gehäusedeckel der die Aufnahmekammer verschließt.

Einen weiteren elektrischen Lüfter, insbesondere für Kraftfahrzeuge zeigt die Offenlegungsschrift DE 100 44 066 A1. Bei dem darin eingesetzten elektrischen Antriebsmotor ist die elektronische Steuereinheit zur Ansteuerung des Lüftermotors mit diesem in einem gemeinsamen Gehäuse angeordnet. Auch wird ein vom Lüfterrad erzeugbarer Kühlluftstrom durch Lüftungsöffnungen des Gehäuses geführt. Zum Kühlen der Steuereinheit ist diese mit mindestens einem Kühlkörper ausgestattet, der am hinteren Lagerdeckel befestigt, in einer Lüftungsöffnung des Gehäuses angeordnet und somit vom Kühlluftstrom durchströmt ist. Hierzu sind separate Kühlkörper und Montageverbindungen zwischen Kühlkörper, Leiterplatte der Steuereinheit und Lagerdeckel des Gehäuses erforderlich. Eine zusätzliche Wärmeabfuhr an der Motorgehäuseaußenseite kann auch hier, und zwar in allen Ausgestaltungsvarianten, nicht stattfinden, da der Kühlluftstrom die einzelnen Wärme erzeugenden Komponenten jeweils nur einmal überstreicht.

Aufgabe der Erfindung ist es, die Kühlung eines Elektromotors zu verbessern und somit die thermische Robustheit gegenüber wechselnden und extremen Umgebungsbedingungen, wie sie zum Beispiel im alltäglichen Einsatz in einem Kraftfahrzeug anzutreffen sind, zu steigern. Gleichzeitig soll der konstruktive und damit auch der Fertigungs- und Montageaufwand reduziert werden.

Diese Aufgabe wird erfindungsgemäß durch ein Kühlgebläse mit den Merkmalen des Anspruchs 1 oder durch ein Verfahren gemäß Anspruch 10 gelöst. Vorteilhafte Ausgestaltungen der Erfindung sind in den Unteransprüchen und in den Ausführungen zu den Zeichnungen beschrieben.

Die erreichte verbesserte Kühlung des Elektromotors erlaubt bei gleicher Leistung einen kleineren Bauraum oder bei gleichem Bauraum eine erhöhte Leistung. Zugleich wird eine hohe Betriebsdauer des Elektromotors durch die erhöhte thermische Robustheit gewährleistet. Ausfälle des Elektromotors aufgrund einer Überhitzung werden vermieden. Darüber hinaus ist die Anzahl der Einzelteile des Lüfters reduziert sowie Fertigung und Montage vereinfacht.

Die Erfindung basiert auf dem Grundgedanken, das Kühlen eines Elektromotors zu verbessern und den konstruktiven sowie montagetechnischen Aufwand zu reduzieren, indem das den Elektromotor umfassende Motorgehäuse als Kühlkörper zur Abgabe von Verlustwärme an einen Luftstrom ausgebildet und so zum Kühlen der Wärme erzeugenden Komponenten mitbenutzt wird. Dazu wird der Kühlluftstrom zur Kühlung des Elektromotors zunächst an der Luft-Eintrittsseite zugeordneten Kühlelementen vorbei durch den Motorgehäuseinnenraum und dann durch einen zwischen einer topfförmigen Lüfterradnabe und dem Motorgehäuse gebildeten Luftspalt an der Außenseite des Motorgehäuses entlang an der Luft-Austrittsseite zugeordneten Kühlelementen vorbei geführt. Der Luftstrom wird dabei durch einen Druckunterschied, der von dem Elektromotor angetriebene Lüfterrad zwischen Luft-Eintrittsseite und Luft-Austrittsseite erzeugt wird, ausgebildet.

Die Führung des aufgrund des Druckunterschiedes bestehenden Kühlluftstroms umfasst dabei sowohl den Fall, dass Abwärme von dem Motorgehäuse an einen in und durch das Motorinnere geführten Kühlluftstrom abgegeben wird, als auch den Fall, dass der Kühlluftstrom außen am Motorgehäuse entlang geführt wird, wo er zusätzlich Abwärme des Elektromotors abführt. Die erhöhten Kühlungsanforderungen der Motorelektronik werden dadurch erfüllt, dass der Kühlluftstrom mehrfach an dem mit der Motorelektronik wärmeleitend verbundenen Motorgehäuseteil vorbei geführt wird. Gleichzeitig wird durch die Mitbenutzung der Gehäuseteile als Kühlkörper der Teile- und Montageaufwand reduziert.

Eine Motorelektronik, die beispielsweise Leistungshalbleiter, Spulen und Elektrolytkondensatoren umfasst, ist unmittelbar wärmeleitend mit einem dem Lüfterrad abgewandten Motorgehäusehinterteil, vorzugsweise dem rückseitigen Lagerschild, mechanisch und thermisch verbunden. So kann eine unmittelbare Wärmeabgabe der durch die Elektronik erzeugten Abwärme an das als Kühlkörper mitbenutzte Motorgehäusehinterteil erfolgen. Vorteilhaft kann hier eine großflächige Verbindung mit Hilfe von Wärmeleitkleber vorgesehen werden.

Zur effektiven Wärmeaufnahme durch den Kühlluftstrom sind Eintrittsöffnungen in einem stirnseitigen Bereich des rückseitigen Motorgehäusehinterteils, zum Einleiten eines Kühlluftstromes in das Motorgehäuse vorgesehen. An oder in den Eintrittsöffnungen sind Kühlelemente angeordnet. Beispielsweise sind die Eintrittsöffnungen durch voneinander beabstandete Kühlelemente, insbesondere Kühlrippen gebildet. Besonders gute Ergebnisse werden erzielt, wenn die Kühlelemente als freistehende Kühlrippen ausgebildet sind, wobei sich zwischen den Kühlrippen die Eintrittsöffnungen befinden bzw. die Eintrittsöffnungen von den Kühlrippen durchsetzt oder unterteilt sind.

Zusätzlich weist das rückseitige Motorgehäusehinterteil, außerhalb des Motorinnenraumes an seinem radialen Außenrand angeordnete Kühlelemente auf, die als zusätzliche Wärmesenke für die in das Motorgehäusehinterteil eingeleitete Verlustwärme der Motorelektronik dienen. Die Lage dieser Kühlelemente ist auf die Lage des Luftaustrittsspaltes gegenüber dem Lüfterradnabenrand derart abgestimmt, dass der durch den Luftaustrittsspalt austretende Kühlluftstrom auf direktem Weg zu diesen Kühlelementen gelangt. Der durch den Luftaustrittsspalt austretende Kühlluftstrom wird also ein weiteres Mal zur zusätzlichen Kühlung der Elektronik genutzt. Bei den Kühlelementen handelt es sich dabei in einer möglichen Ausgestaltung um ringförmig am Umfang des rückseitigen Motorgehäusehinterteils oder auf einem dafür vorgesehenen Flanschrand angeordnete Kühlzapfen. Andere geometrische Formen sind je nach Erfordernis der Einbauumgebung wählbar.

Die Vorteile des erfindungsgemäßen Gegenstandes liegen vor Allem darin, dass die Wege zum Ableiten der Verlustwärme von den Wärme erzeugenden Bauteilen zu den ersten Kühlelementen in oder an den Lufteintrittsöffnungen sehr kurz gehalten sind und dass der Kühlluftstrom sowohl beim Eintreten in den Motorgehäuseinnenraum als auch beim Austreten aus dem randseitig umlaufenden Luftaustrittsspalt Verlustwärme von den dort im Kühlluftstrom angeordneten Kühlelementen des Motorgehäusehinterteils aufnimmt, in die Umgebung abführt und somit das Elektronikmodul doppelt kühlt.

Weitere Vorteile lassen sich erzielen durch die Anordnung der Elektronik im Motorgehäuseinnenraum. Dadurch ist die Elektronik zumindest vor groben Umgebungseinflüssen geschützt ohne eine separate Abdeckung zu benötigen. Darüber hinaus kann eine zusätzliche Kapselung der Elektronik vorgesehen werden, die zum einen dem zusätzlichen Schutz der eingeschlossenen Komponenten dient, und zum anderen dafür sorgt, dass die durch die Elektronik erzeugte Verlustwärme nicht in andere Bereiche des Elektromotors abgeleitet, sondern direkt vor Ort an das Motorgehäusehinterteil abgeleitet und von dort durch den Kühlluftstrom abtransportiert werden kann.

In der den Eintrittsöffnungen gegenüberliegenden Seite des Elektromotorgehäuses sind in einem dem Lüfterrad zugewandten Motorgehäusevorderteil, vorzugsweise dem lüfterradseitigen Lagerschild des Elektromotors, Austrittsöffnungen vorgesehen, durch die der Kühlluftstrom aus dem Motorgehäuseinnenraum austritt.

In weiterer vorteilhafter Ausgestaltung ist die Anordnung der Eintrittsöffnungen des Motorgehäusehinterteils und die der Austrittsöffnungen des Motorgehäusevorderteils so gewählt und gegebenenfalls aufeinander abgestimmt, dass der Kühlluftstrom möglichst parallel zur Rotordrehachse des Motors in das Motorgehäuse hinein durch den Motor hindurch und auch wieder aus dem Motorgehäuse heraus fließen kann. Dies gewährleistet ein möglichst ungehindertes Durchströmen des Kühlluftstroms durch den Elektromotor. Der Luftstrom wird auf diese Weise nicht durch zusätzliche Richtungsänderungen gebremst oder behindert. So lässt sich ein hoher Luftdurchsatz und eine hohe Fließgeschwindigkeit des Kühlluftstromes gewährleisten, was wiederum die Wärmeabfuhr weiter verbessert.

Zur weiteren Verbesserung einer guten Wärmeleitung und einer effizienten Wärmeabgabe an den Kühlluftstrom ist das Motorgehäuse dabei vorteilhaft aus Leichtmetall-Gussteilen, wie zum Beispiel Aluminiumdruckgussteilen, gefertigt. Die Verwendung von Druckgussteilen erlaubt dabei eine verhältnismäßig komplizierte Gehäusegeometrie zur Kühlungsoptimierung, wie sie bei der Verwendung von herkömmlichen Stanzbiegeteilen oder tiefgezogenen Stahlgehäusen nicht möglich sind. Auf diese Weise ist es möglich die Gehäuse- sowie die Kühlelementgeometrie und deren Anordnung nahezu frei zu gestalten und die Kühlelemente einstückig mit dem jeweiligen Gehäuseteil aus dem gleichen gut wärmeleitenden Material, in einem Arbeitsgang zu formen.

Nach Verlassen des Motorgehäuseinnenraumes wird der Kühlluftstrom in dem zwischen Lüfterradnabeninnenseite und der Außenseite des Motorgehäusevorderteils gebildeten Luftspalt zunächst radial nach außen und dann entlang der Außenwand des Motorgehäuses geführt, bis er durch den ringförmigen Luftaustrittsspalt wieder in die Umgebung austritt.

Die Lüfterradnabe, die das Motorgehäusevorderteil zumindest teilweise topfförmig umfasst ist dabei auf der Innenseite mit im Wesentlichen radial verlaufenden Versteifungsrippen ausgestattet, die sich entlang dem Luftspalt erstrecken. Diese Versteifungsrippen wirken bei drehendem Lüfterrad als Luftschaufeln, die den Kühlluftstrom beim Austritt aus dem Motorgehäuse erfassen und die Luftmasse radial beschleunigt.

Weiterhin vorteilhaft ist dabei eine aufeinander abgestimmte Formgebung der Innengeometrie der Lüfterradnabe und der Motorgehäuseteile. Die Kontur der in der Lüfterradnabe eingeformten Versteifungsrippen folgt dabei der Kontur des Motorgehäuses in axialer Richtung vorzugsweise derart, dass zwischen dem feststehenden Motorgehäuse und den drehenden Versteifungsrippen ein möglichst kleiner Spielraum mit konstantem Abstand entsteht, um damit den aus dem Motorgehäuseinnenraum austretenden Kühlluftstrom möglichst vollständig zu erfassen und die Strömungsgeschwindigkeit möglichst effizient zu erhöhen. Dieser Effekt kann zusätzlich verstärkt werden, wenn die Versteifungsrippen nicht radial gerade, sondern zusätzlich gekrümmt oder spiralförmig, ähnlich der Lüfterblätter eines Radiallüfters nach außen verlaufen und so nach Art eines Radiallüfters den Luftstrom zusätzlich verstärken.
Durch solche vorteilhafte Gestaltung der Form und des Verlaufs der Versteifungsrippen, die gleichzeitig als Luftschaufeln wirken, wird der Luftstrom durch den Motorinnenraum weiter erhöht und damit die Kühlwirkung verstärkt.

Eine Verlängerung der Versteifungsrippen über den Rand der Lüfternabe hinaus führt dabei zum Verwirbeln des aus dem ringförmigen Luftaustrittsspalt austretenden Kühlluftstromes und damit zu einem verbesserten Kühlen der im Austrittsbereich des Luftaustrittsspaltes angeordneten Kühlelemente des rückseitigen Gehäuseteils. Eine besonders gute Kühlwirkung wird erzielt, wenn möglichst viele Versteifungsrippen in der Lüfterradnabe angebracht sind. Zusätzlich zu der besonderen Ausgestaltung des Motorgehäuses wird also auch der besondere Aufbau der Lüfterradnabe für eine verbesserte Kühlung der thermisch empfindlichen Komponenten genutzt.

Das Kühlgebläse ist vorzugsweise derart in einer umgebenden Zarge angeordnet, dass eine Führung des Kühlluftstromes von den Lufteintrittsöffnungen auf der Rückseite, durch den Elektromotor hindurch und aus dem Luftaustrittsspalt heraus derart gewährleistet ist, dass kein "Kurzschluss" der Kühlluft erfolgen kann. Dadurch ist stets eine gerichtete Kühlluftströmung von den Eintrittsöffnungen hin zu den Austrittsöffnungen, durch den Luftspalt bis zum Austritt aus dem Luftaustrittsspalt gegeben, ohne dass bereits erwärmte Kühlluft ein weiteres Mal auf der Motorrückseite angesaugt werden kann.

Vorteilhaft ist der Motor dabei derart in eine Zarge montiert, dass die Luft-Eintrittsseite und die Luft-Austrittsseite von der Zarge, zum Beispiel durch einen Zargenring, der gleichzeitig zur Aufnahme des Elektromotors dient, voneinander getrennt sind. Dadurch wird eine hindernislose Vermischung des in das Motorgehäuse eintretenden Kühlluftstromes mit aus dem Motorgehäuse austretender erwärmter Luft verhindert und eine niedrigere Ausgangstemperatur des Kühlluftstromes gewährleistet.

In einer weiteren Ausgestaltung der Erfindung wird zum Antreiben des Kühlgebläses ein bürstenloser Elektromotor mit permanenterregtem Innenrotor und außenliegender elektrisch erregter Statorwicklung verwendet. Im Gegensatz zu einem Elektromotor mit elektrisch erregtem Innenrotor kann bei dem verwendeten elektrisch erregten Außenstator auch von der Statorwicklung erzeugte Abwärme direkt an das Motorgehäuse abgeführt werden. Der Wärmeübergang ist somit im Vergleich zu einem permanentmagneterregten Außenrotor wesentlich verbessert.

Beim Durchströmen des Kühlluftstromes durch den Luftspalt zwischen Motorgehäusevorderteil und Lüfterradnabeninnenseite überstreicht dieser die Außenseite des Motorgehäuses, wobei die Abgabe von Verlustwärme, insbesondere des Statorpaketes, an den Kühlluftstrom erfolgt. Dadurch dient also auch das abtriebsseitige Motorgehäusevorderteil als zusätzlicher Kühlkörper. Da die Abfuhr der Verlustwärme von der Außenseite des Motorgehäusevorderteils wesentlich von der Strömungsgeschwindigkeit des Luftstromes abhängt, ist es vorteilhaft den Luftspaltquerschnitt so zu gestalten, dass dieser in Richtung des Kühlluftstromes nicht erweitert wird. Dies wird beispielsweise durch einen im Wesentlichen gleich bleibenden Abstand des Lüfterradnabenbodens und der Lüfterradnabenwand zum Motorgehäusevorderteil erreicht.

Zusätzlich kann die den Luftaustrittsspalt begrenzende Motorgehäuseaußenwand zusätzliche Kühlelemente, insbesondere Kühlrippen, zur Vergrößerung der wärmeabgebenden Oberfläche aufweisen. Dadurch wird beim Durchströmen des Kühlluftstromes durch den umlaufenden Luftspalt noch mehr Abwärme aufgenommen und abgeführt. Gleichzeitig tragen diese Kühlelemente zusätzlich zur Verwirbelung des Kühlluftstromes bei, da sich die Lüfternabe relativ zu dem feststehenden abtriebsseitigen Gehäuseteil dreht.

Zusätzlich zu der bevorzugten Ausgestaltung des Motorgehäuses wird in einer weiteren Ausführungsform der Erfindung auch der Aufbau des Stators für eine verbesserte Kühlung genutzt. Hierzu ist eine Einzelzahnbewicklung der voneinander beabstandeten Statorzähne vorgesehen. Der Kühlluftstrom kann so auf direktem Weg durch die Nutenschlitze zwischen den Statorzähnen hindurch und an den Wicklungen vorbei geführt werden. Dabei nimmt der Kühlluftstrom bereits im Motorgehäuseinnenraum Abwärme des Statorpaketes auf. Besonders vorteilhaft ist es dabei, wenn die Lage der Eintrittsöffnungen und die Geometrie oder Ausrichtung der Kühlelemente im Bereich der Eintrittsöffnungen auf die Lage der Statorzähne so abgestimmt ist, dass der Kühlluftstrom auf direktem Weg zu der Wicklung der Statorzähne geführt wird.

Die vorliegende Erfindung sowie vorteilhafte Ausgestaltungen werden nachfolgend anhand eines Ausführungsbeispieles beschrieben, das mit Hilfe von Zeichnungen näher erläutert wird. Hierbei zeigen:
- Figur 1: eine vereinfachte schematische Darstellung eines erfindungsgemäßen Kühlgebläses für ein Kraftfahrzeug,
- Figur 2: eine perspektivische Darstellung eines Motorgehäusehinterteils mit darin befestigtem Elektronikmodul,
- Figur 3: eine perspektivische Innenansicht eines abtriebsseitigen Motorgehäusevorderteils mit einzelzahnbewickeltem Stator und permanentmagneterregtem Innen-Rotor,
- Figur 4: eine perspektivische Außenansicht eines Elektromotors mit Kühlelementen von der Gehäusevorderseite her,
- Figur 5: eine perspektivische Darstellung der Innenseite einer Lüfterradnabe mit darin angeordneten Versteifungsrippen,
- Figur 6: eine weitere perspektivische Außenansicht eines Elektromotors mit Kühlelementen von der Seite.

Funktions- und benennungsgleiche Teile sind in den Figuren mit denselben Bezugszeichen versehen.

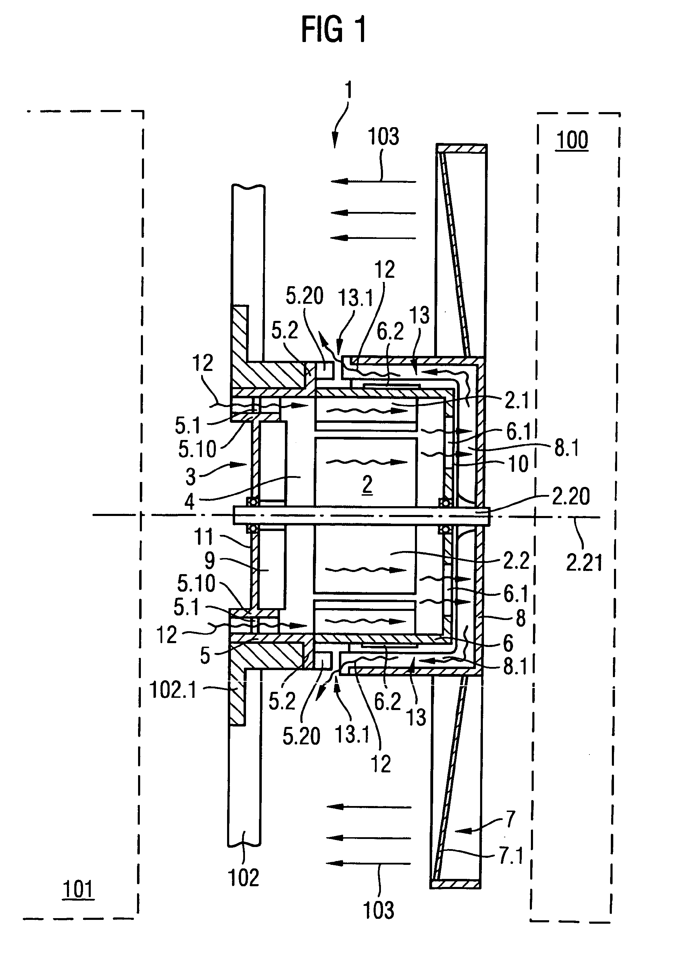

In Figur 1 ist ein Ausführungsbeispiel eines Kühlgebläses, wie es zum Beispiel in einem Kraftfahrzeug eingesetzt wird, in stark vereinfachter schematischer Darstellung abgebildet. Es handelt sich dabei um ein zwischen einem mit durchbrochener Linie angedeuteten Wärmetauscher 100 und einem ebenso angedeuteten Verbrennungsmotor 101 angeordnetes Kühlgebläse.

Das Kühlgebläse 1 weist für seinen Antrieb einen Elektromotor 2 mit einem Stator 2.1 und einem Rotor 2.2 auf, der von einem Motorgehäuse 3 umschlossen ist. Das den Motorgehäuseinnenraum 4 umschließende Motorgehäuse 3 besteht im Wesentlichen aus einem rückseitigen Motorgehäusehinterteil 5 mit integriertem Elektronikmodul 9 und einem mit dem Motorgehäusehinterteil 5 verbundenen abtriebsseitigen Motorgehäusevorderteil 6. Sämtliche Motorgehäuseteile sind hierbei als Aluminiumdruckgussteile ausgeführt. Das Motorgehäuse 3 wird in einer Lüfterzarge 102 gehalten, die zur Montage des Kühlgebläses 1 im Motorraum des Kraftfahrzeugs dient. An dem abtriebsseitigen Motorgehäusevorderteil 6 ist ein Lüfterrad 7 mit einer Lüfterradnabe 8 und Lüfterblättern 7.1 vorgesehen. Das rotierende Lüfterrad 7 erzeugt beim Betrieb des Kühlgebläses 1 einen Druckunterschied zwischen der Motorrückseite 11 und der Motorvorderseite 10 des Elektromotors 2. Hiermit wird ein Hauptluftstrom 103 zum Kühlen des Verbrennungsmotors 101 generiert.

Zugleich wird durch das Lüfterrad 7, insbesondere die Lüfterradnabe 8 ein Kühlluftstrom 12 erzeugt, der durch das Motorgehäusehinterteil 5 in den Motorgehäuseinnenraum 4, am Stator 2.1 vorbei und durch das Motorgehäusevorderteil 6 und den Luftspalt 13 zwischen Lüfterradnabe 8 und Motorgehäusevorderteil 6 an der Gehäuseseitenwand 6.2 entlang auf die Kühlzapfen 5.2 des Motorgehäusehinterteils 5 geführt wird. Der Kühlluftstrom wird dabei genutzt, um Verlustwärme der Motorkomponenten aufzunehmen und in den Hauptluftstrom 103 abzuführen und so den Elektromotor 2 zu kühlen.

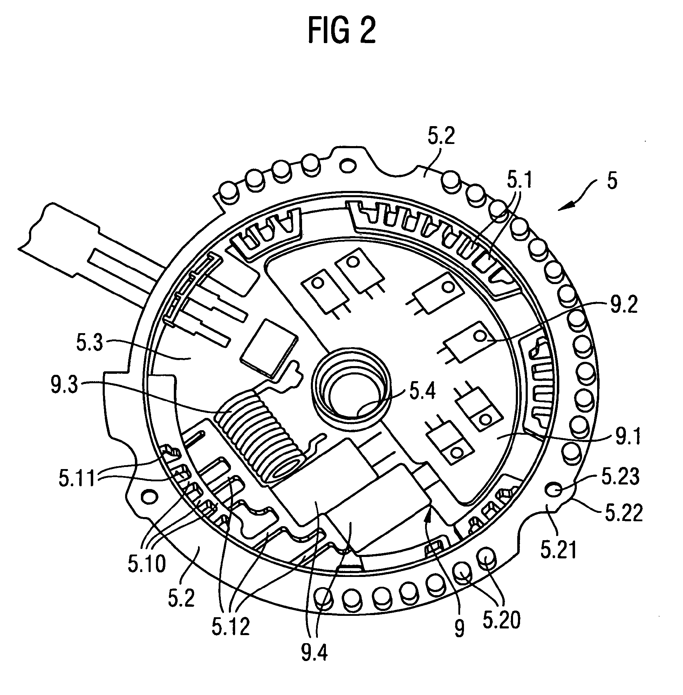

Eine detaillierte Innenansicht des rückseitigen Motorgehäusehinterteils 5 zeigt Figur 2. Es weist auf einen ringförmigen, radialen Außenrand, der eine innerhalb des Außenrandes vertieft angeordneten Gehäuseboden 5.3 umfasst und so eine pfannenförmige Grundform bildet. Der Gehäuseboden weist einen zentrisch darin angeordneten Lagersitz 5.4 für ein Rotorwellenlager 2.23 auf, so dass das Motorgehäusehinterteil 5 zugleich als rückseitiges Lagerschild dient. Auf dem Gehäuseboden 5.3 ist ein Elektronikmodul 9 befestigt, das die Motorelektronik enthält. Das Elektronikmodul 9 umfasst unter anderem eine Leiterplatte 9.1 mit Leistungstransistoren 9.2, einer Spule 9.3 und Kondensatoren 9.4. Die Leiterplatte 9.1 kann mit einem (nicht abgebildeten) Deckel abgedeckt werden. Das Elektronikmodul 9 ist wärmeleitend mit dem Gehäuseboden 5.3 verbunden, so dass entstehende Abwärme direkt in den Gehäuseboden 5.3 abgeleitet wird.

Im Anschlussbereich des Gehäusebodens 5.3 zu dem radialen Außenrand 5.2 weist der Gehäuseboden 5.3 in motoraxialer Richtung verlaufende Eintrittsöffnungen 5.1 für den Kühlluftstrom 12 auf. Diese Randbereiche der Eintrittsöffnungen 5.1 sind derart gestaltet, dass radial und ringförmig verlaufende Kühlelemente 5.10 mit sich motoraxial erstreckenden Wärmeleitflächen 5.11 ausgebildet sind, die als Kühlrippen 5.10 bezeichnet werden können. Diese Kühlrippen 5.10 dienen zugleich als Wärmeleiter zur Ableitung von Verlustwärme des Elektronikmoduls 9 in den radialen Außenrand 5.2 des Motorgehäusehinterteils 5. Die Eintrittsöffnungen 5.1 sind in Gruppen zusammengefasst, wobei die Gruppen durch Gehäusebodenbereiche 5.3 ohne Durchbrüche voneinander getrennt sind.
In Figur 2 tritt der Kühlluftstrom also durch die Eintrittsöffnungen 5.1 in Richtung auf den Betrachter zu in den Motorgehäuseinnenraum 4 ein, wobei das Motorgehäusehinterteil 5 als Kühlkörper für das Elektronikmodul 9 mitbenutzt wird.

Zum gezielten Wärmeableiten von stark Wärme erzeugenden Bauelementen des Elektronikmoduls 9 über den Gehäuseboden 5.3 hin zu den Kühlrippen 5.10 und in den radialen Außenrand 5.2 des Motorgehäusehinterteils 5 sind im Gehäuseboden 5.3 Materialanhäufungen als Wärmeleitstege 5.12 angeordnet. Diese Wärmeleitstege 5.12 stehen zum Teil in unmittelbarem Kontakt mit Wärme erzeugenden Bauelementen des Elektronikmoduls 9. Gleichzeitig erhöhen diese Materialanhäufungen die Wärmekapazität des Motorgehäusehinterteils und somit dessen Pufferfähigkeit gegenüber thermischen Belastungsspitzen.

Am radialen Außenrand sind Montageflächen 5.21 aufweisende Flansche 5.22 mit Verbindungsbohrungen 5.23 zur Ausbildung von Schraubverbindungen zum Motorgehäusevorderteil 6 angebracht. Über diese Schraubverbindungen wird das Motorgehäusehinterteil 5 mit dem abtriebsseitigen Motorgehäusevorderteil 6 verbunden.

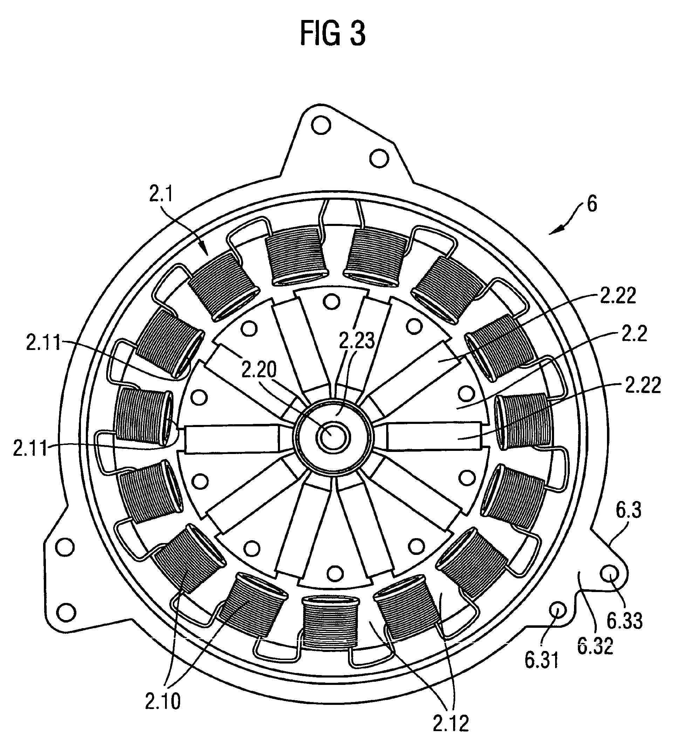

Figur 3 zeigt eine Innenansicht des abtriebsseitigen Motorgehäusevorderteils 6. Die randseitig angebrachten Flansche 6.3 weisen zum einen Verbindungsbohrungen 6.31 zur Ausbildung von Schraubverbindungen mit dem Motorgehäusehinterteils 5 auf. Im montierten Zustand liegen dabei die Montageflächen 6.32 des Motorgehäusevorderteils 6 auf den entsprechenden Montageflächen 5.21 des radialen Außenrandes 5.2 des Motorgehäusehinterteils 5 auf. Zum anderen sind in den Flanschen 6.3 Befestigungsbohrungen 6.33 zur Befestigung des Elektromotors 2, zum Beispiel in einem Motormontagering der Lüfterzarge 102 (nicht in Figur 3 dargestellt), vorgesehen.

Der Elektromotor 2 weist einen im abtriebsseitigen Motorgehäusevorderteils 6 angeordneten Rotor 2.2 mit speichenförmig angeordneten Permanentmagneten 2.22 auf, in deren Mitte die Rotorwelle 2.20 angeordnet ist. Der den Rotor konzentrisch umgebende Stator 2.1 ist aus einem aus einzelnen Blechlamellen aufgebauten Blechpaket aufgebaut. Am Innenumfang des Blechpaketes sind Statorzähne 2.11 mit dazwischen liegenden Nutenschlitzen 2.12 ausgebildet. Die Statorzähne 2.11 sind mit Einzelzahnwicklungen 2.10 versehen, wodurch es nicht zur Ausbildung von in rotoraxialer Richtung ausgeprägten so genannten Wickelköpfen kommt. Der Kühlluftstrom 12 wird von den Eintrittsöffnungen 5.1 im rückseitigen Motorgehäusehinterteil 5 direkt in Richtung der Nutenschlitze 2.12 zwischen den Statorzähnen 2.11 geführt und nimmt beim Durchströmen durch die Nutenschlitze 2.12 Abwärme der Wicklungen 2.10 auf. Dazu sind die Eintrittsöffnungen (5.1) für den Kühlluftstrom (12) im Gehäuseboden 5.3 der Motor-Rückseite 11 des Motorgehäusehinterteils 5 mit im Wesentlichen gleichem radialem Abstand zur Rotorachse wie die Statorzähne 2.11 mit den Einzelzahnwicklungen 2.10 und in unmittelbarer Nachbarschaft der Nutenschlitze 2.12 angeordnet.

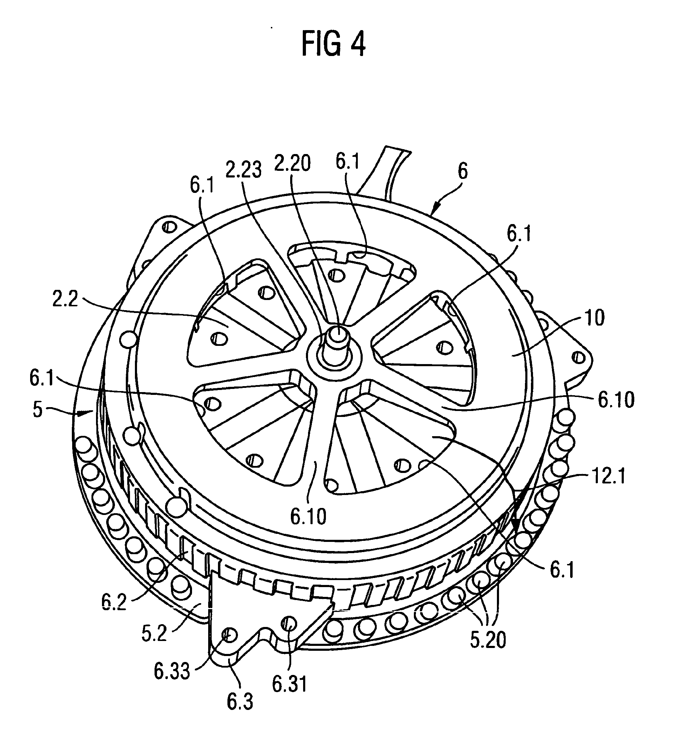

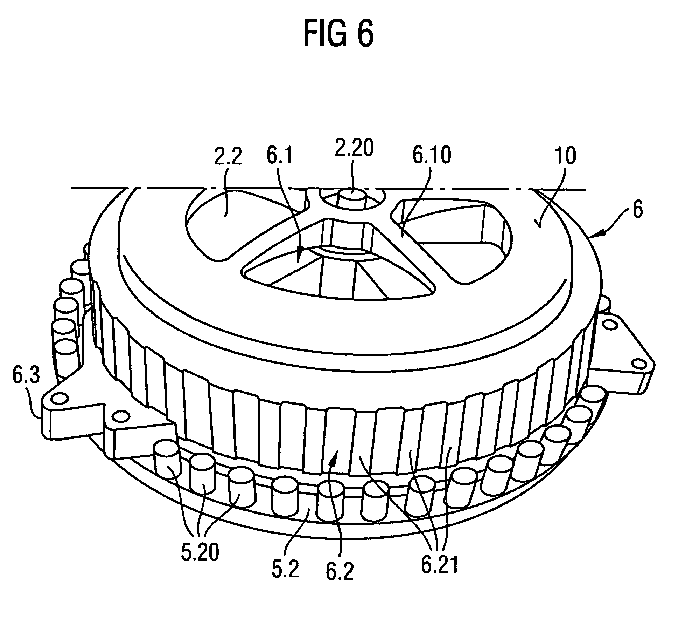

Figur 4 zeigt die Außenansicht eines Elektromotors von der Motorvorderseite 10 aus. Der Motorgehäusevorderteil 7 entspricht dem in Figur 3 dargestellten, wird jedoch aus dazu unterschiedlicher Richtung betrachtet. Dabei ist der Motorgehäusevorderteil 7 bereits auf den Motorgehäusehinterteil 5 aufgesetzt. Der Motorgehäusevorderteil 6 ist als abtriebsseitiges Lagerschild ausgebildet und weist zentriert ein Rotorwellenlager 2.23 auf, in dem die Rotorwelle 2.20 gelagert ist. Das Motorgehäusevorderteil 6 besteht dabei im Wesentlichen aus einer dem Gehäuseboden 5.3 des Motorgehäusehinterteils 5 gegenüberliegenden Motorgehäusevorderseite 10 und einer sich in rotoraxialer Richtung (vgl. Figur 1 und 6) erstreckenden, umlaufenden seitlichen Gehäuseseitenwand 6.2. Die Motorgehäusevorderseite 10 des Motorgehäusevorderteils 6 weist fünf Austrittsöffnungen 6.1 auf. Die durch fünf voneinander getrennten kreissegmentförmigen Austrittsöffnungen 6.1 bilden zusammen eine im Querschnitt kreisförmige, durch die speichenartig angeordnete Trägerstreben 6.10 unterbrochene Öffnung in der Motorgehäusevorderseite 10, die in etwa dem Durchmesser des Rotors 2.2 entspricht.

Durch die Austrittsöffnungen 6.1 tritt der von den Nutenschlitzen 2.12 her kommende Kühlluftstrom 12 aus dem Motorgehäuseinnenraum 4 aus und überstreicht in Strömungsrichtung 12.1 über die Motorgehäusevorderseite 10 und die Gehäuseseitenwand 6.2 hinweg, wobei er Wärmeenergie von den Motorkomponenten aufnimmt.

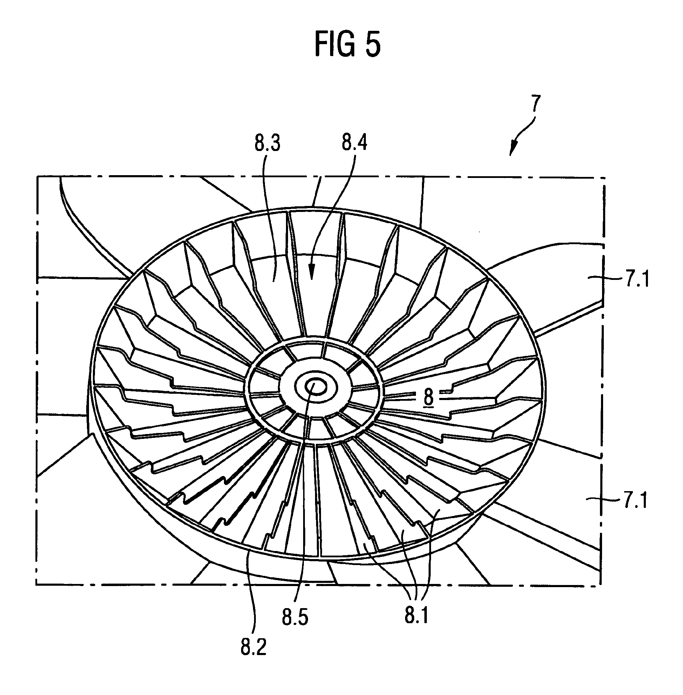

Der Motorgehäusevorderteil 6 wird topf- oder glockenartig von der Lüfterradnabe 8 umfasst, deren Innenseite 8.4 in Figur 5 gezeigt ist. An der Lüfterradnabe 8 sind die Lüfterblätter 7.1 zur Erzeugung des Hauptluftstromes 103 zum Kühlen des Verbrennungsmotors (nicht in Figur 4 dargestellt) des Kraftfahrzeuges befestigt. In der Mitte der Lüfternabe 8 ist eine Rotorwellenkupplung 8.5 für die Rotorwelle 2.20 vorgesehen. Davon ausgehend sind radial nach außen verlaufende Versteifungsrippen 8.1 auf dem Nabenboden 8.3 angebracht. Die Versteifungsrippen 8.1 bilden dabei näherungsweise die Kontur der Motorgehäusevorderteils 6 nach und sind in geringem Abstand zur Gehäuseaußenseite angeordnet. Im Betriebszustand ergibt sich so ein quasi umlaufender Luftspalt zwischen abtriebsseitigem Motorgehäusevorderteil 6 und Lüfternabeninnenseite 8.4. Die Versteifungsrippen 8.1 unterteilen den Luftspalt 13 in Umfangsrichtung und wirken bei Drehung des Lüfterrades 7 als Luftschaufeln, die den Kühlluftstrom 12 durch den Motorgehäuseinnenraum 4 aufbauen oder zumindest verstärken. In einer weiteren Ausführungsform können die Versteifungsrippen 8.1 auch sichel-, bogen- oder spiralförmig von Zentrum der Lüfterradnabe 8 aus nach außen zum Lüfternabenrand 8.2 verlaufen.

Der Kühlluftstrom 12 läuft, nachdem er aus den Austrittsöffnungen 6.1 aus dem Motorgehäuseinnenraum 4 ausgetreten ist, zwischen Lüfterradnabe 8 und Motorgehäusevorderteil 6 über die Motorgehäusevorderseite 10 des abtriebsseitigen Lagerschildes und die Gehäuseseitenwand 6.2 und tritt schließlich durch den Luftaustrittsspalt 13.1 (vgl. Figur 1) aus dem Kühlgebläse 1 aus. Der abtriebsseitige Motorgehäusevorderteil 6 wird so gleichzeitig als Kühlkörper für den Stator 2.1 mitbenutzt.

Die Lüfterradnabe 8 wird auf der Rotorwelle 2.20, wie sie in den Figuren 4 und 6 dargestellt ist, befestigt. Der Luftaustrittsspalt 13.1 (vgl. Figur 1) wird also zwischen der seitlichen Gehäusewand 6.2 und der Lüfternabeninnenseite 8.4 der Lüfternabe 8 gebildet. Die den Luftaustrittsspalt 13.1 begrenzende Gehäuseseitenwand 6.2 weist in rotoraxialer Richtung verlaufende Außenkühlrippen 6.21 zur Vergrößerung der Wärme abgebenden Oberfläche auf, die zugleich zur Verwirbelung des Kühlluftstromes beitragen.

Wie ebenfalls aus Figur 6 ersichtlich, weist die Gehäusevorderseite 10 eine abgestufte Kontur auf. Dementsprechend sind auch die Versteifungsrippen 8.1 in der Lüfternabe 8 (vgl. Figur 5) geformt, so dass sich ein korrespondierender Konturverlauf ergibt. Im Betrieb wird der Kühlluftstrom 12 durch die Drehung der Lüfterradnabe 8 beim Austritt aus den Austrittsöffnungen 6.1 von den Versteifungsrippen 8.1 mitgenommen und in Drehrichtung beschleunigt. Durch die Zentrifugalkraft entsteht gleichzeitig eine Beschleunigung der Luftmasse in radialer Richtung. Dadurch wird der Kühlluftstrom 12 von der Rotorachse weg gerichtet in Strömungsrichtung 12.1 beschleunigt.

Die Versteifungsrippen 8.1 können in spezieller Ausprägung in rotoraxialer Richtung sowie zusätzlich in radialer Richtung über den Lüfternabenrand 8.2 der Lüfternabe 8 hinaus verlängert sein, was zu einer Verwirbelung des austretenden Kühlluftstromes und einer dadurch verbesserten Wärmeaufnahme durch den Kühlluftstrom an den Kühlelementen führt.

Unmittelbar gegenüber des Luftaustrittsspalts 13.1 (vgl. Figur 1) sind auf dem radialen Außenrand 5.2 des Motorgehäusehinterteils 5 Kühlzapfen 5.20 vorgesehen. Diese Kühlzapfen 5.20 sind auf dem radialen Außenrand 5.2 des rückseitigen Motorgehäusehinterteils 5 verteilt angeordnet und axial in Richtung Luftaustrittsspalt 13.1 gerichtet(vgl. Figur 2, 4 und 6). Die Kühlzapfen 5.20 sind einstückig mit dem radialen Außenrand 5.2 ausgebildet und erhöhen durch ihre Masse zusätzlich die Wärmekapazität des Motorgehäusehinterteils 5 zur Aufnahme von Abwärme des Elektronikmoduls 9. Gleichzeitig vergrößern sie durch ihre Zapfenform die Wärme abgebende Oberfläche des Motorgehäusehinterteils 5.
Durch die beschriebene Anordnung befinden sich die Kühlzapfen 5.20 unmittelbar gegenüber dem Luftaustrittsspalt 13.1 und werden von dem dort austretenden, von den überstehenden Versteifungsrippen 8.1 verwirbelten Kühlluftstrom 12 überströmt. Dabei wird Wärme von den Kühlzapfen 5.20 in den sie umströmenden Kühlluftstrom 12 abgegeben und in die Umgebung abgeführt. Somit wird der Kühlluftstrom 12 auf seinem Weg ein weiteres Mal zur Kühlung der Elektronik-Komponenten herangezogen. Durch die rotierende Bewegung des Lüfterrades 9 wird dann die erwärmte Abluft des Elektromotors 2 dem Hauptluftstrom 103 für den Verbrennungsmotor zugeführt.

## Patentansprüche

1. Kühlgebläse (1) bestehend aus einem Elektromotor (2) und einem Lüfterrad (7), wobei
- der Elektromotor (2) einen Stator (2.1), einen Rotor (2.2), ein mehrteiliges Motorgehäuse (3) und ein Elektronikmodul (9) aufweist und das Motorgehäuse (3) zumindest gebildet ist aus einem dem Lüfterrad (7) zugewandten, die Motorvorderseite (10) bildenden Motorgehäusevorderteil (6) und einem dem Lüfterrad (7) abgewandten, die Motorrückseite (11) bildenden Motorgehäusehinterteil (5);
- das Lüfterrad (7) eine topfförmige Lüfterradnabe (8) aufweist die drehfest mit dem Rotor (2.2) des Elektromotors (2) verbunden ist und die das Motorgehäuse (3) axial und radial beabstandet zumindest teilweise topfförmig umfasst, derart, dass zwischen Motorgehäuseaußenseite und Lüfterradnabeninnenseite ein Luftspalt (13) ausgebildet ist, in dem sich Ausformungen (8.1) der Lüfterradnaben-Innenseite erstrecken, welche als Luftschaufeln wirken;
- die Lüfterradnabe (8) durch Rotation mit dem Rotor (2.2) einen Druckunterschied zwischen der Motorrückseite (11) und der Motorvorderseite (10) des Elektromotors (2) erzeugt und
- das Elektronikmodul (9) unmittelbar am Motorgehäusehinterteil (5) wärmeleitend befestigt ist, welches Motorgehäusehinterteil (5) als Kühlkörper zum Ableiten von durch das Elektronikmodul (9) erzeugter Wärmeenergie und zum Abgeben dieser Wärmeenergie an einen durch den Druckunterschied erzeugten Kühlluftstrom (12) ausgebildet ist, wobei in und/oder an Eintrittsöffnungen (5.1) in der Motor-Rückseite (11) erste Kühlelemente (5.10) vorgesehen sind die vom Kühlluftstrom (12) beim Eintritt in den Motorgehäuseinnenraum (4) gekühlt werden,
**dadurch gekennzeichnet, dass** am radialen Außenrand (5.2) des Motorgehäusehinterteils (5) im Austrittsbereich eines durch die Lüfterradnabe (8) gebildeten randseitig umlaufenden Luftaustrittsspalts (13.1) zweite Kühlelemente (5.20) vorgesehen sind, die vom Kühlluftstrom (12) beim Austritt aus dem Luftaustrittsspalt (13.1) gekühlt werden.

2. Kühlgebläse (1) nach Anspruch 1, **gekennzeichnet dadurch, dass** das Elektronikmodul (9) im Motorgehäuseinnenraum (4) des Elektromotors (2) angeordnet ist.

3. Kühlgebläse (1) nach einem der Ansprüche 1 oder 2, **dadurch gekennzeichnet, dass** das die Eintrittsöffnungen (5.1) für den Kühlluftstrom (12) in der Motor-Rückseite (11) des Motorgehäusehinterteils (5) und die zugeordneten Kühlelemente (5.10) so angeordnet und ausgebildet sind, dass der Kühlluftstrom (12) im Wesentlichen parallel zur Rotordrehachse (2.21) in das Motorgehäuse (3) eintritt.

4. Kühlgebläse (1) nach einem der Ansprüche 1 bis 3, **gekennzeichnet dadurch, dass** die Motor-Vorderseite (10) des Motorgehäusevorderteil (6) Austrittsöffnungen (6.1) für den Kühlluftstrom (12) aufweist, durch die der Kühlluftstrom (12) im Wesentlichen parallel zur Rotordrehachse (2.21) aus dem Motorgehäuseinnenraum (4) austritt.

5. Kühlgebläse (1) nach einem der Ansprüche 1 bis 4, **dadurch gekennzeichnet, dass** das Motorgehäusehinterteil (5) aus einer Leichtmetalllegierung hergestellt ist und die Kühlelemente (5.10/5.20) des Motorgehäusehinterteils (5) einstückig mit und aus dem Material des Motorgehäusehinterteils (5) ausgebildet sind.

6. Kühlgebläse (1) nach einem der Ansprüche 1 bis 5, **gekennzeichnet dadurch, dass** die Lüfterradnabe (8) auf ihrer Innenseite Ausformungen (8.1) aufweist, die gerade oder gekrümmt in radialer Richtung verlaufen und axial der Kontur des Motorgehäuses (3) mit geringem Abstand angepasst sind, wodurch diese gleichzeitig als Versteifungsrippen (8.1) für die Lüfterradnabe und als Luftschaufeln (8.1) wirken und den Kühlluftstrom (12) verstärken.

7. Kühlgebläse (1) nach einem der Ansprüche 1 bis 6, **dadurch gekennzeichnet, dass** der Elektromotor (2), einen auf einer Rotorwelle (2.20) angeordneten permanenterregten Innenrotor (2.2) und einen mit Einzelzahnwicklungen (2.10) ausgeführten und mit dem Motorgehäuse wärmeleitend verbundenen Stator (2.1) aufweist.

8. Kühlgebläse (1) nach Anspruch 7, **dadurch gekennzeichnet, dass** die Eintrittsöffnungen (5.1) für den Kühlluftstrom (12) in der Motor-Rückseite (11) des Motorgehäusehinterteils (5) mit im Wesentlichen gleichem radialem Abstand zur Rotorachse angeordnet sind wie die Einzelzahnwicklungen (2.10) des Stators (2.1), damit der in den Motorgehäuseinnenraum (4) eintretende Kühlluftstrom (12) unmittelbar auf die Einzelzahnwicklungen (2.10) des Stators trifft.

9. Kühlgebläse (1) nach Anspruch 7 oder 8, **dadurch gekennzeichnet, dass** die Motorgehäuseaußenseite des Motorgehäusevorderteils (6) zumindest in den vom Kühlluftstrom (12) überströmten Bereichen im Luftspalt (13) Ausformungen, vorzugsweise Außenkühlrippen (6.2), zur Vergrößerung ihrer Oberfläche aufweist, welche vom Kühlluftstrom (12) überströmt werden.

## Claims

1. Cooling fan (1) consisting of an electric motor (2) and a fan wheel (7), wherein
- the electric motor (2) comprises a stator (2.1), a rotor (2.2), a multi-part motor housing (3) and an electronics module (9), and the motor housing (3) is formed at least of a front motor housing part (6), which faces the fan wheel (7) and forms the front motor face (10), and a rear motor housing part (5), which is remote from the fan wheel (7) and forms the rear motor face (11);
- the fan wheel (7) comprises a cup-shaped fan wheel hub (8), which is rotationally engaged with the rotor (2.2) of the electric motor (2) and which encloses the motor housing at least in part, in a cup shape, with axial and radial spacing, in such a way that an air gap (13), in which mouldings (8.1) of the inside of the fan wheel hub extend and act as air blades, is formed between the outside of the motor housing and the inside of the fan wheel hub;
- the fan wheel hub (8) creates a pressure difference between the rear motor face (11) and the front motor face (10) of the electric motor (2) by rotating together with the rotor (2.2), and
- the electronics module (9) is fastened directly to the rear motor housing part (5) in a thermally conductive manner, said rear motor housing pat (5) being formed as a cooling element for dissipating heat energy created by the electronics module (9) and for releasing this heat energy to a cooling airstream (12) created by the pressure difference, first cooling elements (5.10) being provided in and/or on inlet openings (5.10) in the rear motor face (11) and being cooled by the cooling airstream (12) as it enters the interior (4) of the motor housing,
**characterised in that** two cooling elements (5.20) are provided at the radial outer edge (5.2) of the rear motor housing part (5), in the outlet region of an air outlet gap (13.1) extending around the edge and formed by the fan wheel hub (8), and are cooled by the cooling airstream (12) as it exits the air outlet gap (13.1).

2. Cooling fan (1) according to claim 1, **characterised in that** the electronics module (9) is arranged in the interior (4) of the motor housing of the electric motor (2).

3. Cooling fan (1) according to either claim 1 or claim 2, **characterised in that** the inlet openings (5.1) for the cooling airstream (12), in the rear motor face (11) of the rear motor housing part (5), and the associated cooling elements (5.10) are arranged and formed in such a way that the cooling airstream (12) enters the motor housing (3) substantially parallel to the axis of rotation (2.21) of the rotor.

4. Cooling fan (1) according to any one of claims 1 to 3, **characterised in that** the front motor face (10) of the front motor housing part (6) comprises outlet openings (6.1) for the cooling airstream (12), through which the cooling airstream (12) exits the interior (4) of the motor housing parallel to the axis of rotation (2.21) of the rotor.

5. Cooling fan (1) according to any one of claims 1 to 4, **characterised in that** the rear motor housing part (5) is made of a light metal alloy, and the cooling elements (5.10/5.20) of the rear motor housing part (5) are formed integrally with and from the material of the rear motor housing part (5).

6. Cooling fan according to any one of claims 1 to 5, **characterised in that** the fan wheel hub (8) comprises mouldings (8.1) on the inside thereof, which extend straight or curved in the radial direction and are axially matched to the contour of the of the motor housing (3) with a slight spacing, and thus simultaneously act as reinforcing ribs (8.1) for the fan wheel hub and as air blades (8.1) and amplify the cooling airstream (12).

7. Cooling fan (1) according to any one of claims 1 to 6, **characterised in that** the electric motor (2) comprises a permanently excited internal rotor (2.2), which is arranged on a rotor shaft (2.20), and a stator (2.1), which is formed with single-tooth windings (2.10) and is connected to the motor housing in a thermally conductive manner.

8. Cooling fan (1) according to claim 7, **characterised in that** the entry openings (5.1) for the cooling airstream (12) are arranged in the rear motor face (11) of the rear motor housing part (5) at substantially the same radial spacing from the rotor axis as the single-tooth windings (2.10) of the stator (2.1), in such a way that the cooling airstream (12) entering the interior (4) of the motor housing strikes the individual tooth windings (2.10) of the stator directly.

9. Cooling fan (1) according to either claim 7 or claim 8, **characterised in that** the outside of the front motor housing part (6) of the motor housing comprises mouldings, preferably external cooling ribs (6.2), at least in the regions of the air gap (13) which are flowed over by the cooling airstream (12), for increasing the surface area thereof which is flowed over by the cooling airstream (12).

## Revendications

1. Ventilateur de refroidissement (1) composé d'un moteur électrique (2) et d'une roue de ventilateur (7), dans lequel :
- le moteur électrique (2) présente un stator (2.1), un rotor (2.2), un carter de moteur en plusieurs parties (3) et un module électronique (9) et le carter de moteur (3) est au moins formé d'une partie frontale de carter de moteur (6) formant la face frontale du moteur (10) orientée vers la roue de ventilateur (7) et d'une partie arrière du carter de moteur (5) formant la face arrière du moteur (11) opposée à la roue de ventilateur (7) ;
- la roue de ventilateur (7) présente un moyeu de roue de ventilateur (8) en forme de pot, qui est raccordé solidaire en rotation avec le rotor (2.2) du moteur électrique (2) et qui entoure le carter de moteur (3) axialement et radialement à distance au moins partiellement sous forme de pot, de telle sorte qu'il se forme entre la face extérieure du carter de moteur et la face intérieure du moyeu de roue de ventilateur (13) une lame d'air (13), dans laquelle s'étendent des conformations (8.1) de la face intérieure du moyeu de roue de ventilateur, qui agissent comme des pales à air ;
- le moyeu de la roue de ventilateur (8) produit par rotation avec le rotor (2.2) une différence de pression entre la face arrière du moteur (11) et la face frontale du moteur (10) du moteur électrique (2) et
- le module électronique (9) est fixé de manière thermoconductrice directement sur la partie arrière du carter de moteur (5), laquelle partie arrière du carter de moteur (5) ayant la forme d'un dissipateur de chaleur pour évacuer l'énergie calorifique produite par le module électronique (9) et pour délivrer cette énergie calorifique à un flux d'air de refroidissement (12) produit par la différence de pression, des premiers éléments de refroidissement (5.10) étant prévus dans et/ou sur des ouvertures d'entrée (5.1) dans la face arrière du moteur (11), qui sont refroidis par le flux d'air de refroidissement (12) lors de l'entrée dans l'espace intérieur du carter de moteur (4),
**caractérisé par le fait que** des seconds éléments de refroidissement (5.20) sont prévus sur le bord périphérique radial (5.2) de la partie arrière du carter de moteur (5) dans la zone de sortie d'une fente de sortie d'air (13.1) disposée périphériquement en bordure formée par le moyeu de roue de ventilateur (8), qui sont refroidis par le flux d'air de refroidissement (12) lors de la sortie de la fente de sortie d'air (13.1).

2. Ventilateur de refroidissement (1) selon la revendication 1, **caractérisé par le fait que** le module électronique (9) est disposé dans l'espace intérieur du carter de moteur (4) du moteur électrique (2).

3. Ventilateur de refroidissement (1) selon l'une des revendications 1 ou 2, **caractérisé par le fait que** les ouvertures d'entrée (5.1) pour le flux d'air de refroidissement (12) et les éléments de refroidissement (5.10) associés sont disposés et agencés dans la face arrière du moteur (11) de la partie arrière du carter de moteur (5) de telle sorte que le flux d'air de refroidissement (12) entre essentiellement parallèlement à l'axe de rotation du rotor (2.21) dans le carter de moteur (3).

4. Ventilateur de refroidissement (1) selon l'une des revendications 1 ou 3, **caractérisé par le fait que** la face frontale du moteur (10) de la partie frontale du carter de moteur (6) présente des ouvertures de sortie (6.1) pour le flux d'air de refroidissement (12), à travers lesquelles le flux d'air de refroidissement (12) sort de l'espace intérieur du carter de moteur (4) essentiellement en parallèle à l'axe de rotation du rotor (2.21).

5. Ventilateur de refroidissement (1) selon l'une des revendications 1 ou 4, **caractérisé par le fait que** la partie arrière du carter de moteur (5) est réalisée en alliage de métal léger et les éléments de refroidissement (5.10/5.20) de la partie arrière du carter de moteur (5) sont formés en un seul tenant avec et à partir du matériau de la partie arrière du carter de moteur (5).

6. Ventilateur de refroidissement (1) selon l'une des revendications 1 ou 5, **caractérisé par le fait que** le moyeu de roue de ventilateur (8) présente des conformations sur sa face intérieure (8.1), qui s'étendent de manière rectiligne ou incurvée dans le sens radial et sont adaptées à faible distance axialement au contour du carter de moteur (3), celles-ci agissant ainsi simultanément comme nervures de renfort (8.1) pour le moyeu de roue de ventilateur et comme roues à air (8.1) et renforçant le flux d'air de refroidissement (12).

7. Ventilateur de refroidissement (1) selon l'une des revendications 1 ou 6, **caractérisé par le fait que** le moteur électrique (2) présente un rotor intérieur (2.2) excité en permanence disposé sur un arbre de rotor (2.20) et un stator (2.1) réalisé avec des enroulements monodents (2.10) et relié de manière thermoconductrice avec le carter de moteur.

8. Ventilateur de refroidissement (1) selon la revendication 7, **caractérisé par le fait que** les ouvertures d'entrée (5.1) pour le flux d'air de refroidissement (12) sont disposées dans la face arrière de moteur (11) de la partie arrière du carter de moteur (5) essentiellement à la même distance radiale par rapport à l'axe de rotor que les enroulements monodents (2.10) du stator (2.1), afin que le flux d'air de refroidissement (12) entrant dans l'espace intérieur du carter de moteur (4) est directement indicent sur les enroulements monodents (2.10) du stator.

9. Ventilateur de refroidissement (1) selon la revendication 7 ou 8, **caractérisé par le fait que** la face extérieure du carter de moteur de la partie frontale du carter de moteur (6) présente, au moins dans les zones parcourues par le flux d'air de refroidissement (12) dans la lame d'air (13), des conformations, préférentiellement des ailettes de refroidissement extérieures (6.2), pour augmenter sa surface, qui sont parcourues par le flux d'air de refroidissement (12).
